# NEUE EUROPÄISCHE PATENTSCHRIFT

(11) **EP 1 336 449 B2**
(45) Veröffentlichungstag und Bekanntmachung des Hinweises auf die Entscheidung über den Einspruch: **14.10.2009**
(45) Hinweis auf die Patenterteilung: 19.04.2006
(21) Anmeldenummer: 03001456.7
(22) Anmeldetag: 22.01.2003
(51) Int. Cl.: B23P 15/10, F01B 3/00, F04B 1/12, B23K 20/00

(54) **Hohlkolben und Verfahren zu dessen Herstellung durch Diffusionsschweissen oder Sintern**
Hollow piston and method for manucturing it by diffusion welding or sintering
Piston creux et procédé de sa fabrication par soudage, diffusion ou frittage

(30) Priorität: 18.02.2002 DE 10206728
(43) Veröffentlichungstag der Anmeldung: 20.08.2003
(73) Patentinhaber: Brueninghaus Hydromatik GmbH, 89275 Elchingen (DE)
(72) Erfinder: Gärtner, Bernd, 89194 Schnürpflingen (DE)
(74) Vertreter: Körfer, Thomas

(56) Entgegenhaltungen:
- EP-A- 1 084 793
- DD-A- 142 372
- DE-A- 2 364 725
- DE-A- 2 653 867
- DE-A- 19 934 216
- DE-C- 19 620 167
- US-A- 3 815 219
- US-A- 5 394 788
- US-A- 5 642 654
- US-B1- 6 318 241
- LISON, R.: 'Jahr.buch Schweisstechnisches Fachwissen', 1993, DÜSSELDORF Artikel 'Diffusionsschweissen und seine Anwendungen', Seite 155-163

## Beschreibung

Die Erfindung betrifft einen Hohlkolben für eine Kolbenmaschine, insbesondere eine Axialkolbenmaschine, nach dem Oberbegriff des Anspruchs 1 und ein Verfahren zur Herstellung eines solchen Hohlkolbens.

Nächstliegender Stand der Technik US-6,318,241 offenbart einen solchen Hohlkolben und ein verfahren zu dessen Herstellung.

Die bei Axialkolbenmaschinen früher eingesetzten Massivkolben setzten einem Betrieb bei höheren Drehzahlen Grenzen. Bei höheren Drehzahlen ergeben sich Festigkeitsprobleme für die Zylinder und für die Kolben-Rückhalteeinrichtung aufgrund der hohen auftretenden Flieh- und Massenkräfte sowie thermische Probleme an den Berührungsflächen zwischen Kolben und Zylinder aufgrund der aus den Fliehkräften resultierenden Reibungskräfte. Um Axialkolbenmaschinen mit erhöhter Drehzahl betreiben zu können, werden daher Hohlkolben eingesetzt. Problematisch ist bei deren Herstellung insbesondere die Fügung zwischen dem Hauptkörper des Hohlkolbens und dem Deckel, welcher den Hohlkolben abschließt.

Beispielsweise ist aus der DE 26 53 867 A1 ein Hohlkolben für eine Axialkolbenmaschine in Schrägscheibenbauweise bekannt, welcher einen Kugelkopf, einen mit diesem verbundenen Kolbenmantel eine den Hohlkolben durchdringende Zentralsäule, einen Stirnflächendeckel und eine Zentralbohrung aufweist. Der Kugelkopf, die Endplatte und der Kolbenmantel sowie die Zentralsäule und der Stirnflächendeckel bestehen dabei aus jeweils einem Werkstück, wobei die beiden Werkstücke durch mindestens eine Lötverbindung miteinander verbunden sind. Die Verlötung erfolgt dabei insbesondere durch Hartlöten.

Nachteilig an dem aus der DE 26 53 867 A1 bekannten Hohlkolben ist dabei, daß das Verlöten mit dem Stirnflächendeckel einerseits zu Wülsten führt, welche durch Nachbearbeitung entfernt werden müssen. Andererseits werden die Lötstellen während des Betriebs der Axialkolbenmaschine mit Schub- und Querkräften belastet, wenn auf den Stirnflächendeckel der Druck des zu komprimierenden Arbeitsmediums einwirkt. Dies kann zum Bruch der Lötstellen führen.

Verfahren zum Verbinden von Hauptkörper und Deckel durch Dreh-Reibschweißen bzw. Elektronenstrahlschweißen sind aus der DE 23 64 725 A bzw. DE 19620 167 C1 bekannt.

Aus der US 3,815,219 ist ein Diffusionsschweißverfahren bekannt, bei welchem die Teile des Schweißerzeugnisses zusammengebaut, in nahem Kontakt miteinander montiert festgehalten, die zu einem Teilesatz zusammengebauten Teile in eine Hochtemperaturschmelze eingetaucht und darin unter Atmosphärendruck erwärmt werden. Danach wird der Teilesatz aus der Schmelze entfernt und die Teile des Schweißerzeugnisses untereinander zusammengedrückt, solange sie eine hohe Temperatur aufweisen. Dabei sind die Teile mit einer Schmelzflußhaut bedeckt, die die Kontaktflächen vor Oxidation schützt. Danach wird der Teilesatz ein weiteres Mal in die Schmelze eingetaucht und in der Schmelze bei Atmosphärendruck bis zu einer Temperatur weiter erwärmt, bei der die Austauschdiffusion zwischen den Schweißteilen einsetzt. Die Verwendung des in der US 3,815,219 beschriebenen Verfahrens zum Diffusionsschweißen ist dort zur Herstellung von Hohlkolben für Kolbenmaschinen jedoch nicht beschrieben und wird durch diese Druckschrift auch nicht angeregt.

Die US 5,394,788 offenbart einen gekühlten Kolben mit einer geschlossenen Kühlkammer und ein Verfahren zur Herstellung eines solchen Kolbens. Die EP 1084793 A1 offenbart einen Kolben für einen Verbrennungsmotor mit einer Kühlkammer. Die US 6,318,241 offenbart einen Kolben, der aus einem Rohr und einem in das Rohr eingesetzten Einsatz und mit einem oder zwei Abschlussstücken gebildet ist.

Der Erfindung liegt die Aufgabe zugrunde, einen Hohlkolben zu schaffen, welcher stabil genug gefertigt ist, den Scher- und Druckkräften des Arbeitsmediums standzuhalten und ein Verfahren zur Herstellung solcher Hohlkolben anzugeben.

Die Aufgabe wird bezüglich des Hohlkolben durch die Merkmale des Anspruchs 1 und bezüglich des Herstellungsverfahrens durch die Merkmale des Anspruchs 16 gelöst.

Dabei ist der erfindungsgemäße Hohlkolben für eine Kolbenmaschine mit einem rohrförmigen Hauptkörper mit einer zumindest über einen Teil der axialen Länge des Hauptkörpers ausgebildeten Ausnehmung versehen, mit einem in der Ausnehmung des Hauptkörpers angeordneten Stützbauteil, mit einem Deckel, welcher die Ausnehmung gegen eine Umgebung des Hohlkolbens abschließt, der Hohlkolben an seinem dem Deckel abgewandten Ende ein Lager zum schwenkbaren Eingreifen eines Gelenkkopfs aufweist, wobei das Lager einstückig an den Hauptkörper des Hohlkolbens angeformt ist und der Deckel mit dem Hauptkörper des Hohlkolbens durch Sintern verbunden ist oder das Lager von dem Hauptkörper des Hohlkolbens und einem separaten Bauteil gebildet wird und der Deckel und das separate Bauteil mit dem Hauptkörper des Hohlkolbens durch Sintern verbunden ist.

Dabei besonders vorteilhaft ist die einfache und kostengünstige Herstellbarkeit der Hohlkolben durch das erfindungsgemäße SinterVerfahren, welches kostspielige Nachbearbeitungen der Schweißnähte überflüssig macht.

Die durch nicht erfindungsgemäßes Diffusionsschweißen hergestellten Verbindungsschweißnähte sind größtenteils innenliegend ausgebildet, so daß sie gegenüber Scher- und Druckkräften beim Betrieb der Kolbenmaschine geschützt sind. Belastungsbrüche der Schweißnähte können dadurch wirkungsvoll verhindert werden.

Vorteilhafte Weiterbildungen des erfindungsgemäß ausgestalteten Kolbens und des erfindungsgemäßen Verfahrens sind in den Unteransprüchen beschrieben.

Weiterhin ist von Vorteil, daß das Stützbauteil, welches die Durchführungsbohrung für das Arbeitsmedium umfaßt, entweder einstückig mit dem Deckel oder mit dem Hohlkolben herstellbar ist.

Der Deckel kann dabei insbesondere im letztgenannten Fall in einfacher Weise scheibenförmig ausgeführt sein, wobei das Stützbauteil an dem Deckel anliegt oder es durchgreift.

Vorteilhafterweise kann das Stützbauteil in eine Ausnehmung des Hohlkolbens zur besseren Stabilisierung eingeschoben sein.

Von Vorteil ist auch, daß der Deckel den Hohlkolben stirnseitig aufliegend oder in den Hohlkolben stirnseitig eingeschoben abschließen kann.

Von Vorteil ist weiterhin, daß Hohlkolben in inverser Bauweise entweder ein einstückig ausgebildetes Lager für die Gelenkköpfe oder eine separate, in den Hohlkolben einschiebbare Lagerhülse aufweisen können. Der Vorteil der letztgenannten Ausführungsform ist dabei insbesondere die einfache Herstellbarkeit des Hauptkörpers des Hohlkolbens, welcher rohrförmig ausgebildet ist.

Die Erfindung wird nachfolgend anhand von bevorzugten Ausführungsbeispielen und der Darstellung der sich gegenüber dem Stand der Technik ergebenden Vorteile anhand der Zeichnung näher erläutert. Es zeigen:
- Fig. 1: ein erstes Beispiel eines Hohlkolbens,
- Fig. 2: ein zweites Beispiel eines Hohlkolbens,
- Fig. 3: ein erstes Ausführungsbeispiel eines erfindungsgemäßen Hohlkolbens in inverser Bauweise,
- Fig. 4: ein zweites Ausführungsbeispiel eines erfindungsgemäßen Hohlkolbens in inverser Bauweise,
- Fig. 5: ein drittes Ausführungsbeispiel eines erfindungsgemäßen Hohlkolbens in einer Bauweise mit einer Wandung aus einem Rohrstück, und
- Fig. 6: ein viertes Ausführungsbeispiel eines erfindungsgemäßen Hohlkolbens in einer Bauweise mit einer Wandung aus einem Rohrstück.

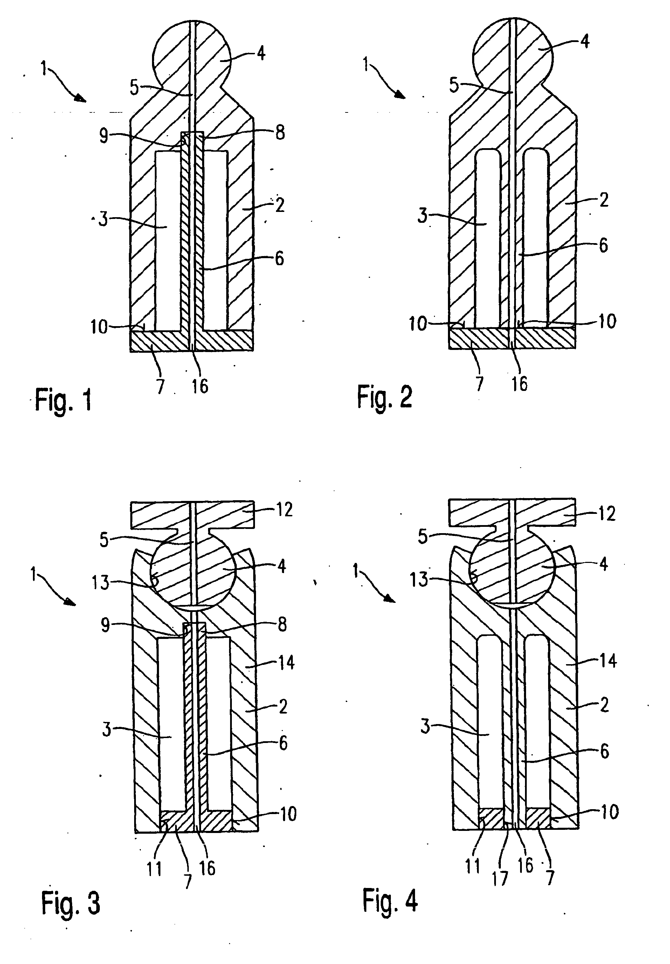

Die in den Fig. 1 bis 6 dargestellten Beispiele von Hohlkolben sind insbesondere zur Anwendung in Axialkolbenmaschinen geeignet. Eine derartige Axialkolbenmaschine kann dabei beispielsweise in Schrägscheibenbauweise mit verstellbarem Verdrängungsvolumen ausgeführt sein und umfaßt in bekannter Weise als wesentliche Bauteile ein hohlzylindrisches Gehäuse, einen am Gehäuse befestigten Anschlußblock, eine Schrägscheibe, einen Steuerkörper, eine Triebwelle und eine Zylindertrommel. In der Zylindertrommel sind Zylinderbohrungen radial gleichmäßig verteilt angeordnet. In den Zylinderbohrungen sind die in den Fig. 1 und 2 näher beschriebenen Hohlkolben axial verschiebbar angeordnet, wobei sich die in den Fig. 1 und 2 als Kugelköpfe ausgebildeten Gelenkköpfe der Hohlkolben über Gleitschuhe an der Schrägscheibe abstützen. Die Hohlkolben können jedoch auch in inverser Bauweise ausgeführt sein, wie in den Fig. 3 bis 6 dargestellt, wobei die Gleitschuhe die als Kugelköpfe ausgebildeten Gelenkköpfe tragen und mit diesen in entsprechende Lager der Hohlkolben eingreifen.

Um die Axialkolbenmaschinen mit höherer Drehzahl betreiben zu können, werden die Kolben als Hohlkolben ausgeführt und wahlweise mit einem geeigneten Kern versehen. Der Kern dient dabei einerseits der Gewichtsersparnis und andererseits der Stabilisierung des Hohlkolbens. Nach Einbringen des Kerns wird der Hohlkolben mit einem Deckel versehen, welcher den Hohlkolben gegen seine Umgebung zur Minimierung des Totvolumens abschließt. Diese Deckel sind gewöhnlich mittels verschiedener Löt- oder Schweißtechniken mit dem Hohlkolben verbunden. Die Nachteile solcher Verbindungen sind vielfältig. Neben dem erhöhten Fertigungsaufwand und den dadurch entstehenden Kosten zum Glätten der Schweiß- oder Lötstellen sind insbesondere die Gefahr des Abscherens des Deckels unter Belastung durch Querkräfte beim Betrieb der Axialkolbenmaschine.

Es wird daher der in den Fig. 1 und 2 dargestellte Hohlkolben 1 durch Diffusionsschweißen oder Sintern mit einem Deckel verbunden.

Das nicht erfindungsgemäße Diffusionsschweißen ermöglicht die Verschweißung von Werkstücken auch unterschiedlichen Materials ohne die Ausbildung von Schweißnähten. Die Bruch- und Reißfestigkeit solchermaßen verschweißter Werkstücke ist derjenigen des Ausgangsmaterials ähnlich. Beim Diffusionsschweißen werden die Teile des Schweißerzeugnisses in nahem Kontakt miteinander montiert und unter Atmosphärendruck in einer Schutzgasatmosphäre erwärmt. Danach werden die Teile des Schweißerzeugnisses untereinander zusammengedrückt, solange sie eine hohe Temperatur aufweisen. Dabei können die Teile mit einer Schmelzflußhaut bedeckt sein, die die Kontaktflächen vor Oxidation schützt. Danach werden die Teile ein weiteres Mal bei Atmosphärendruck bis zu einer Temperatur weiter erwärmt, bei der die Austauschdiffusion zwischen den Schweißteilen einsetzt. Das Diffusionsschweißen kann dabei je nach Größe der Teile, der Temperatur und des Drucks bis zu mehrere Tage dauern.

Bei dem erfindungsgemaß vorgeschlagene Verfahren des Sinterns werden Preßlinge aus Metallpulver mittels verschiedener Verfestigungsverfahren hergestellt und zur weiteren Verfestigung einer Wärmebehandlung bei ca. 2/3 bis 3/4 der absoluten Schmelztemperatur des Stoffes unterzogen. Wegen der Oxidationsempfindlichkeit der meisten Sinterwerkstoffe muß unter einer Schutzgasatmosphäre gesintert werden. Im Verlauf der Wärmebehandlung finden beim Preßling Veränderungen im Gefüge und ggf. auch der Legierungsform statt. Der Sinterprozeß läuft dabei in drei Stadien ab. Zunächst bilden sich durch einen Wachstum der Teilchenkontakte sog. Sinterbrücken, wobei die einzelnen Teilchen jedoch noch sichtbar bleiben und nur eine geringe Schwindung eintritt. Danach bildet sich ein zusammenhängendes Porenskelett, wobei die ursprünglichen Teilchen ihre Identität verlieren. Schließlich tritt eine Porenrundung und -eliminierung ein, wobei sich geschlossene Poren bilden. Im Grenzfall erfolgt eine vollständige Verdichtung. Die Schrumpfung bzw. die Dichtezunahme der Preßlinge beim Sintern hängt dabei von Temperatur, Atmosphäre und Sinterzeit ab. Je höher die Sintertemperatur und je länger die Sinterzeit, desto dichter wird der Sinterkörper. Die Sintertemperaturen liegen dabei für Eisen und legierte Stähle zwischen 1120 und 1280°C.

Zumindest einer der beiden zu verbindenden Teile, insbesondere der Hauptkörper 2, kann auch durch ein spanendes Fertigungsverfahren hergestellt sein.

Von Vorteil ist dabei sowohl beim Diffusionsschweißen als auch beim Sintern, daß auch verdeckte Verbindungen an Punkten der Werkstücke hergestellt werden können, welche beispielsweise für Lichtbogenschweißverfahren nicht zugänglich sind.

Die Fig. 1 und 2 zeigen gemäß dem oben genannten Verfahren hergestellte Hohlkolben 1 für eine Kolbenmaschine wie oben beschrieben. Die Hohlkolben 1 sind dabei in konventioneller Weise ausgeführt, d. h. als Kugelköpfe ausgebildete Gelenkköpfe 4 der Hohlkolben 1 stützen sich über Gleitschuhe an der Schrägscheibe der Axialkolbenmaschine ab.

Das in Fig. 1 dargestellte Beispiel zeigt dabei eine Variante eines Hohlkolbens 1, bei welcher der Hohlkolben 1 einen Hauptkörper 2 umfaßt, welcher eine sich zumindest über einen Teil der axialen Länge des Hauptkörpers 2 erstreckende Ausnehmung 3 aufweist. Die Ausnehmung 3 kann mittels spanender oder nichtspanender Verfahren in gängiger Weise hergestellt werden. Mit dem Hauptkörper 2 ist in der vorliegenden Bauform des Hohlkolbens 1 der Gelenkkopf 4 ausgebildet, welcher eine Bohrung 5 aufweist, durch welche das Hydraulikfluid zum Gleitschuh zum Zwecke der Schmierung und hydrostatischen Entlastung strömt.

In die Ausnehmung 3 erstreckt sich ein rohrförmiges Stützbauteil 6, in welches sich die Bohrung 5 des Gelenkkopfes 4 fortsetzt. Das Stützbauteil 6 ist dabei im vorliegenden ersten Ausführungsbeispiel einstückig mit einem Deckel 7 verbunden und mit einem dem Deckel 7 abgewandten Ende 8 in eine Ausnehmung 9 des Hauptkörpers 2 eingeschoben. Der Deckel 7 schließt den Hohlkolben 1 stirnseitig abdeckend gegen die Umgebung ab. Der Deckel 7 wird dabei wie eingangs erwähnt, durch Diffusionsschweißen oder Sintern mit dem Hauptkörper 2 des Hohlkolbens 1 verbunden. Die so entstehenden Schweißnähte 10 sind flach, müssen nicht aufwendig nachbearbeitet werden und sind stabil gegenüber den in der Kolbenmaschine auf die Hohlkolben 1 wirkenden Scher- und Druckkräfte.

In Fig. 2 ist ein Beispiel eines Hohlkolbens 1 in konventioneller Bauweise dargestellt. Übereinstimmende Bauteile sind dabei mit übereinstimmenden Bezugszeichen versehen.

Im Gegensatz zu dem in Fig. 1 dargestellten ersten Beispiel weist der Hohlkolben im vorliegenden zweiten Ausführungsbeispiel ein mit dem Hohlkolben 1 einstückig ausgebildetes Stützbauteil 6 auf. Dieses kann beispielsweise bei der Fertigung der Ausnehmung 3 durch geeignete Fertigungsmethoden hergestellt werden. Das Stützbauteil 6 weist ebenfalls eine Bohrung 5 auf.

Zum stirnseitigen Abschluß des Hohlkolbens 1 ist wiederum ein Deckel 7 vorgesehen, welcher in diesem Beispiel aus einer einfach herstellbaren Scheibe mit einer Öffnung 16 besteht. Da der Hauptkörper 2 des Hohlkolbens 1 und das Stützbauteil 6 eine gleiche axiale Erstreckung aufweisen, schließt der Deckel 7 sowohl den Hohlkolben 1 als auch die Bohrung 5 ab. Die Verbindungsmethode des nicht erfindungsgemäßen Diffusionsschweißens ist in diesem Beispiel besonders vorteilhaft anwendbar, da in einem Arbeitsgang beide Bauteile mit dem Deckel 7 verbunden werden können.

Die Fig. 3 bis 6 zeigen erfindungsgemäße Ausführungsbeispiele für die inverse Ausführung der Hohlkolben 1, bei welcher die als Kugelköpfe ausgebildete Gelenkköpfe 4 mit Gleitschuhen 12, welche sich an der Schrägscheibe der Axialkolbenmaschine abstützen, beispielsweise einstückig ausgebildet sind und in ein Lager 13 in dem Hauptkörper 2 des Hohlkolbens 1 schwenkbar eingreifen. Die Gelenkköpfe 4 weisen ebenfalls eine Bohrung 5 zur Fluidleitung auf.

Dabei weisen die in den Fig. 3 und 4 dargestellten Ausführungsbeispiele ein Lager 13 auf, welches einstückig an den Hauptkörper 2 des Hohlkolbens 1 angeformt ist.

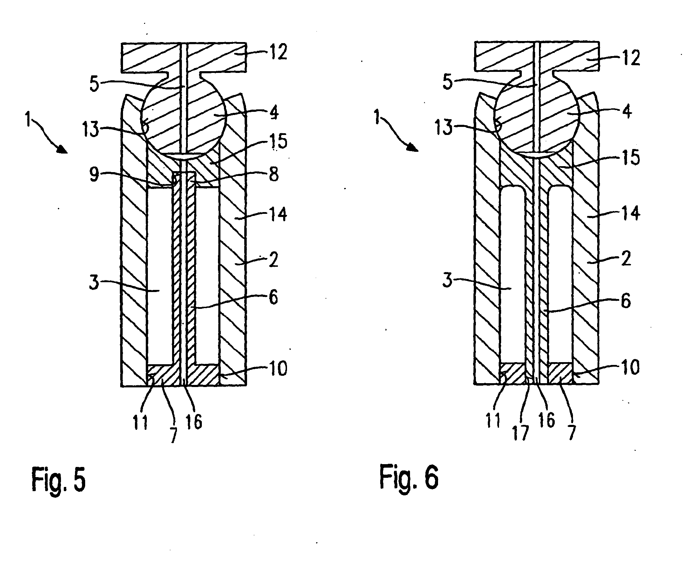

Die in den Fig. 5 und 6 dargestellten Ausführungsbeispiele hingegen ist die Wandung 14 des Hauptkörpers 2 aus einem Rohrstück geformt, während das Lager 13 von dem Hauptkörper 2 des Hohlkolbens 1 und einem separaten Bauteil, einer Lagerhülse 15, gebildet wird.

In Fig. 3 ist eine Ausführungsform gezeigt, welche in Analogie zu der in Fig. 1 dargestellten Ausführungsvariante in konventioneller Bauweise zu sehen ist.

Auch in dem in Fig. 3 dargestellten Ausführungsbeispiel ist das Stützbauteil 6 einstückig mit dem Deckel 7 ausgebildet und greift mit seinem dem Deckel 7 abgewandten Ende 8 in eine Ausnehmung 9 ein. Im Gegensatz zu dem in Fig. 1 dargestellten Beispiel schleißt der Deckel 7 jedoch den Hohlkolben 1 nicht stirnseitig abdeckend ab, sondern ist in den Hauptkörper 2 eingeschoben und dann durch nicht erfindungsgemäßen Diffusionsschweißen oder erfindungsgemäßen Sintern mit diesem verbunden. Der Vorteil dieser Ausführungsvariante ist die geschützte Lage der Schweißnähte 10, welche auf diese Weise nicht direkt den Zentrifugalkräften beim Betrieb der Kolbenmaschine ausgesetzt sind.

Die verschiedenen Formen der Deckel 7 in den Fig. 1 und 3 sind nicht auf das jeweilige Ausführungsbeispiel beschränkt, sondern auch für die jeweils andere Bauform des Hohlkolbens 1 anwendbar.

In Fig. 4 ist eine Ausführungsform gezeigt, welche in Analogie zu der in Fig. 2 dargestellten Ausführungsvariante zu sehen ist.

Im Ausführungsbeispiel der Fig. 4 ist das Stützbauteil 6 einstückig mit dem Hohlkolben 1 ausgebildet. Der Deckel 7 ist ebenfalls in Form einer Scheibe mit einer Öffnung 17 ausgebildet. In diesem Fall durchgreift jedoch das Stützbauteil 6 den Deckel 7 durch die Öffnung 17. Die zwischen dem Hauptkörper 2 und dem Deckel 7 bzw. dem Stützbauteil 6 ausgebildeten Diffusionsschweißnähte 10 sind wie indem in Fig. 3 dargestellten Ausführungsbeispiel innenliegend ausgebildet und daher geschützt.

Auch hier sind die verschiedenen Formen der Deckel 7 in den Fig. 2 und 4 nicht auf das jeweilige Ausführungsbeispiel beschränkt, sondern auch für die jeweils andere Bauform des Hohlkolbens 1 anwendbar.

In Fig. 5 ist eine Ausführungsform gezeigt, welche in Analogie zu der in Fig. 3 dargestellten Ausführungsvariante zu sehen ist. Wie bereits weiter oben erwähnt, ist die Lagerhülse 15 als separates Bauteil ausgebildet und in den Hauptkörper 2 des Hohlkolbens 1 eingeschoben. Die Lagerhülse 15 wird dabei wie der Deckel 7 durch nicht erfindungsgemäßen Diffusionsschweißen oder Sintern mit dem Hohlkolben 1 verbunden. Das Stützbauteil 6 ist in die Lagerhülse 15 eingeschoben.

In Fig. 6 ist eine Ausführungsform gezeigt, welche in Analogie zu der in Fig. 4 dargestellten Ausführungsvariante zu sehen ist. Die Lagerhülse 15 ist wiederum als eigenständiges Bauteil ausgebildet, ist jedoch einstückig mit dem Stützbauteil 6 ausgeführt. Auch hier kann die Verbindung zwischen dem Hauptkörper 2 des Hohlkolbens 1 mit der Lagerhülse 15 einerseits und zwischen dem Deckel 7, dem Stützbauteil 6 und dem Hauptkörper 2 andererseits durch Sintern stattfinden.

Der Vorteil der beiden letztgenannten Ausführungsbeispiele ist insbesondere die einfache Herstellbarkeit des Hauptkörpers 2 des Hohlkolbens 1, welcher rohrförmig ausgebildet ist.

Weitere Möglichkeiten zur Ausgestaltung der Hohlkolben sind beispielsweise durch eine einstückige Ausbildung der Lagerhülse 15 mit dem Stützbauteil 6 und dem Deckel 7 in Fig. 5 oder durch die einstückige Ausbildung des mit der Lagerhülse 15 einstückig ausgebildeten Stützbauteils 6 mit dem Deckel 7 in Fig. 6 gegeben.

## Patentansprüche

1. Hohlkolben (1) für eine Kolbenmaschine mit einem rohrförmigen Hauptkörper (2) mit einer zumindest über einen Teil der axialen Länge des Hauptkörpers (2) ausgebildeten Ausnehmung (3), mit einem in der Ausnehmung (3) des Hohlkolbens (1) angeordneten Stützbauteil (6), mit einem Deckel (7), welcher die Ausnehmung (3) gegen eine Umgebung des Hohlkolbens (1) abschließt, der Hohlkolben (1) an seinem dem Deckel (7) abgewandten Ende ein Lager zum schwenkbaren Eingreifen eines Gelenkkopfs aufweist,
wobei das Lager einstückig an den Hauptkörper des Hohlkolbens angeformt ist und der Deckel (7) mit dem Hauptkörper (2) des Hohlkolbens (1) durch Sintern verbunden ist oder das Lager von dem Hauptkörper des Hohlkolbens und einem separaten Bauteil gebildet wird und der Deckel (7) und das separate Bauteil mit dem Hauptkörper (2) des Hohlkolbens (1) durch Sintern verbunden ist.

2. Hohlkolben nach Anspruch 1,
**dadurch gekennzeichnet,**
**dass** das Stützbauteil (6) eine Bohrung (5) aufweist

3. Hohlkolben nach Anspruch 1 oder 2,
**dadurch gekennzeichnet,**
**dass** das Stützbauteil (6) einstückig mit dem Deckel (7) ausgebildet ist.

4. Hohlkolben nach Anspruch 3,
**dadurch gekennzeichnet,**
**dass** das Stützbauteil (6) mit einem dem Deckel (7) abgewandten Ende (8) in eine Ausnehmung (9) des Hohlkolbens (1) eingeschoben ist.

5. Hohlkolben nach Anspruch 1,
**dadurch gekennzeichnet,**
**dass** das Stützbauteil (6) einstückig mit dem Hauptkörper (2) des Hohlkolbens (1) ausgebildet ist.

6. Hohlkolben nach einem der Ansprüche 1 bis 5,
**dadurch gekennzeichnet,**
**dass** der Deckel (7) an dem Hauptkörper (2) stirnseitig aufliegt.

7. Hohlkolben nach einem der Ansprüche 1 bits 5,
**dadurch gekennzeichnet,**
**dass** der Deckel (7) in den Hauptkörper (2) stirnseitig eingeschoben ist.

8. Hohlkolben nach Anspruch 7,
**dadurch gekennzeichnet,**
**dass** der Deckel (7) scheibenförmig ausgeführt ist.

9. Hohlkolben nach Anspruch 8,
**dadurch gekennzeichnet,**
**dass** der scheibenförmige Deckel (7) eine Öffnung (17) aufweist.

10. Hohlkolben nach Anspruch 9,
**dadurch gekennzeichnet,**
**dass** das Stützbauteil (6) den Deckel (7) durch die Öffnung (17) durchgreift.

11. Hohlkolben nach einem der Ansprüche 1 bis 10,
**dadurch gekennzeichnet,**
**dass** das separate Bauteil eine Lagerhülse (15) ist, die in den Hauptkörper (2) einsetzbar ist.

12. Hohlkolben nach Anspruch 11,
**dadurch gekennzeichnet,**
**dass** das Stützbauteil (6) einstückig mit der Lagerhülse (15) ausgebildet ist.

13. Hohlkolben nach Anspruch 3,
**dadurch gekennzeichnet,**
**dass** das Stützbauteil (6) mit einem dem Deckel (7) abgewandten Ende (8) in eine Ausnehmung (9) der Lagerhülse (15) eingeschoben ist.

14. Hohlkolben nach Anspruch 12,
**dadurch gekennzeichnet,**
**dass** die Wandung des Hohlkolbens (1) aus einem einstückigen Rohrstück besteht.

15. Hohlkolben nach Anspruch 12 oder 13,
**dadurch gekennzeichnet,**
**dass** die Lagerhülse (15) in den Hauptkörper (2) des Hohlkolbens einschiebbar und mit diesem durch Sintern verbunden ist.

16. Verfahren zur Herstellung eines Hohlkolbens (1) für eine Kolbenmaschine nach zumindest einem der vorhergehenden Ansprüche 1 bis 15 mit folgenden Verfahrensschritten:
- Herstellen eines Hauptkörpers (2) des Hohlkolbens (1), in welchem eine Ausnehmung (3) zumindest über einen Teil der axialen Länge des Hohlkolbens (1) ausgebildet ist,
- Herstellen eines Deckels (7), und
- Verbinden des Hauptkörpers (2) des Hohlkolbens (1) mit dem Deckel (7) zur Herstellung eines Verbundes zwischen dem Hauptkörper (2) des Hohlkolbens (1) und dem Deckel (7) durch Sintern.

17. Verfahren nach Anspruch 16,
**dadurch gekennzeichnet,**
**dass** der Deckel (7) mit einem daran ausgebildeten Stützbauteil (6) hergestellt wird und das Stützbauteil (6) in die Ausnehmung (3) des Hauptkörpers (2) eingesetzt wird.

18. Verfahren nach Anspruch 16,
**dadurch gekennzeichnet,**
**dass** der Hauptkörper (2) mit einem darin einstückig ausgebildeten Stützbauteil (6) hergestellt wird und der Deckel (7) durch Sintern mit der Wandung (14) des Hauptkörpers (2) und dem Stützbauteil (6) verbunden wird.

## Claims

1. Hollow piston (1) for a piston machine, comprising a tubular main body (2) with a cavity (3) formed over at least a part of the axial length of the main body (2), a support component (6) arranged in the cavity (3) of the hollow piston (1) and a cover (7) that closes the cavity (3) to an environment of the hollow piston (1), the hollow piston (1) having on its end facing away from the cover (7) a bearing for swivellable engagement of an articulated joint head,
the bearing is formed in one piece with the main body of the hollow piston and the cover (7) is connected to the main body (2) of the hollow piston (1) by sintering, or the bearing is formed by the main body of the hollow piston and a separate component and the cover (7) and the separate component are connected to the main body (2) of the hollow piston (1) by sintering.

2. Hollow piston according to claim 1,
**characterised in that** the support component (6) has a bore (5).

3. Hollow piston according to claim 1 or 2,
**characterised in that** the support component (6) is formed in one piece with the cover (7).

4. Hollow piston according to claim 3,
**characterised in that** an end (8) of the support component (6) facing away from the cover (7) is inserted in a recess (9) of the hollow piston (1).

5. Hollow piston according to claim 1,
**characterised in that** the support component (6) is formed in one piece with the main body (2) of the hollow piston (1).

6. Hollow piston according to any one of claims 1 to 5,
**characterised in that** the cover (7) abuts the end face of the main body (2).

7. Hollow piston according to any one of claims 1 to 5,
**characterised in that** the cover (7) is inserted into the end face of the main body (2).

8. Hollow piston according to claim 7,
**characterised in that** the cover (7) is in the form of a disc.

9. Hollow piston according to claim 8,
**characterised in that** the disc-shaped cover (7) has an opening (17).

10. Hollow piston according to claim 9,
**characterised in that** the support component (6) passes through the opening (17) in the cover (7).

11. Hollow piston according to any one of claims 1 to 10,
**characterised in that** the separate component is a bearing bush (15) which is insertable in the main body (2).

12. Hollow piston according to claim 11,
**characterised in that** the support component (6) is formed in one piece with the bearing bush (15).

13. Hollow piston according to claim 3,
**characterised in that** an end (8) of the support component (6) facing away from the cover (7) is inserted in a recess (9) of the bearing bush (15).

14. Hollow piston according to claim 12,
**characterised in that** the wall of the hollow piston (1) consists of a one-piece tubular part.

15. Hollow piston according to claim 12 or 13,
**characterised in that** the bearing bush (15) is insertable into the main body (2) of the hollow piston and is joined thereto by sintering.

16. Method for producing a hollow piston (1) for a piston machine according to at least one of the preceding claims 1 to 15, comprising the following process steps:
- production of a main body (2) of the hollow piston (1) in which a cavity (3) is formed over at least a part of the axial length of the hollow piston (1);
- production of a cover (7), and
- connection of the main body (2) of the hollow piston (1) to the cover (7) to produce a joint between the main body (2) of the hollow piston (1) and the cover (7) by sintering.

17. Method according to claim 16,
**characterised in that** the cover (7) is produced with a support component (6) formed thereon and the support component (6) is inserted in the cavity (3) of the main body (2).

18. Method according to claim 16,
**characterised in that** the main body (2) is produced with a support component (6) formed integrally therein and the cover (7) is connected to the wall (14) of the main body (2) and to the support component (6) by sintering.

## Revendications

1. Piston creux (1) pour une machine à pistons, comprenant un corps principal tubulaire (2) présentant un évidement (3) ménagé sur au moins une partie de la longueur axiale du corps principal (2), avec une pièce de soutien (6) agencée dans l'évidement (3) du corps principal (2), un couvercle (7) qui ferme l'évidement (3) vis-à-vis d'un environnement du piston creux (1), et le piston creux (1) comportant, à son extrémité détournée du couvercle (7), un palier (13) pour l'engagement pivotant d'une tête d'articulation,
dans lequel
le palier (13) est conformé d'une seule pièce sur le corps principal (2) du piston creux (1) et le couvercle (7) est relié au corps principal (2) du piston creux (1) par soudage-diffusion ou par frittage, ou en ce que le palier (13) est formé par le corps principal (2) du piston creux (1) et par un composant (15) séparé, et le couvercle (7) et le composant séparé (15) sont reliés au corps principal (2) du piston creux (1) par frittage.

2. Piston creux selon la revendication 1, **caractérisé en ce que** la pièce de soutien (6) présente un perçage (5).

3. Piston creux selon la revendication 1 ou 2, **caractérisé en ce que** la pièce de soutien (6) est réalisée d'une seule pièce avec le couvercle (7).

4. Piston creux selon la revendication 3, **caractérisé en ce que** la pièce de soutien (6) est enfilée, par une extrémité (8) détournée du couvercle (7), dans un évidement (9) du piston creux (1).

5. Piston creux selon la revendication 1, **caractérisé en ce que** la pièce de soutien (6) est réalisée d'une seule pièce avec le corps principal (2) du piston creux (1).

6. Piston creux selon l'une des revendications 1 à 5, **caractérisé en ce que** le couvercle (7) est appliqué du côté frontal sur le corps principal (2).

7. Piston creux selon l'une des revendications 1 à 5, **caractérisé en ce que** le couvercle (7) est enfilé du côté frontal dans le corps principal (2).

8. Piston creux selon la revendication 7, **caractérisé en ce que** le couvercle (7) est réalisé en forme de disque.

9. Piston creux selon la revendication 8, **caractérisé en ce que** le couvercle en forme de disque (7) présente une ouverture (17).

10. Piston creux selon la revendication 9, **caractérisé en ce que** la pièce de soutien (6) traverse le couvercle (7) à travers l'ouverture (17).

11. Piston creux selon l'une des revendications 1 à 10, **caractérisé en ce que** le composant séparé est une douille de montage (15), susceptible d'être intégrée dans le corps principal (2).

12. Piston creux selon la revendication 11, **caractérisé en ce que** la pièce de soutien (6) est réalisée d'une seule pièce avec la douille de montage (15).

13. Piston creux selon la revendication 3, **caractérisé en ce que** la pièce de soutien (6) est enfilée, par une extrémité (8) détournée du couvercle (7), dans un évidement (9) de la douille de montage (15).

14. Piston creux selon la revendication 12, **caractérisé en ce que** la paroi du piston creux (1) est constituée par une pièce tubulaire d'un seul tenant.

15. Piston creux selon la revendication 12 ou 13, **caractérisé en ce que** la douille de montage (15) est susceptible d'être enfilée dans le corps principal (2) du piston creux (1), et d'être reliée à celui-ci par frittage.

16. Procédé pour produire un piston creux (1) pour une machine à pistons, selon l'une au moins des revendications précédentes 1 à 15, comprenant les étapes de procédé suivantes :
-- fabrication d'un corps principal (2) du piston creux (1), dans lequel est réalisé un évidement (3) sur une partie au moins de la longueur axiale du piston creux (1),
-- fabrication d'un couvercle (7), et
-- jonction du corps principal (2) du piston creux (1) avec le couvercle (7) pour réaliser une liaison entre le corps principal (2) du piston creux (1) et le couvercle (7) par frittage.

17. Procédé selon la revendication 16, **caractérisé en ce que** le couvercle (7) est fabriqué avec une pièce de soutien (6) réalisée sur lui-même, et **en ce que** la pièce de soutien (6) est mise en place dans l'évidement (3) du corps principal (2).

18. Procédé selon la revendication 16, **caractérisé en ce que** le corps principal (2) est fabriqué avec une pièce de soutien (6) réalisée d'une seule pièce sur lui-même, et **en ce que** le couvercle (7) est relié à la paroi (14) du corps principal (2) et à la pièce de soutien (6) par frittage.
